# EUROPÄISCHE PATENTSCHRIFT

(11) **EP 4 613 620 B1**
(45) Veröffentlichungstag und Bekanntmachung des Hinweises auf die Patenterteilung: **15.07.2026**
(21) Anmeldenummer: 24161645.7
(22) Anmeldetag: 06.03.2024
(51) Int. Cl.: B62K 19/06, B62K 19/16, B62K 3/08

(54) **KREUZRAHMEN FÜR EIN FAHRRAD UND FAHRRAD**
CROSS FRAME FOR A BICYCLE AND BICYCLE
CADRE CROISÉ POUR BICYCLETTE ET BICYCLETTE

(43) Veröffentlichungstag der Anmeldung: 10.09.2025
(73) Patentinhaber: Muff, André Armando, 8802 Kilchberg (CH)
(72) Erfinder: Muff, André Armando, 8802 Kilchberg (CH)
(74) Vertreter: Kohlmann, Kai

(56) Entgegenhaltungen:
- DE-U1- 202018 101 361
- US-B2- 10 710 663

## Beschreibung

Die Erfindung betrifft einen Kreuzrahmen für ein Fahrrad umfassend
- ein Steuerrohr und ein Sattelrohr mit einem am unteren Ende des Sattelrohres angeordneten Tretlagerbereich,
- ein am Steuerrohr ansetzendes, geradliniges erstes Rohr, welche das Sattelrohr kreuzt und sich dann in Richtung des Hinterbau-Ausfallendes erstreckt,
- ein oberhalb des ersten Rohres am Steuerrohr ansetzendes zweites Rohr, welches das erste Rohr an einer Kreuzung kreuzt und sich dann zum Tretlagerbereich erstreckt.

Ein Kreuzrahmen ist ein Fahrradrahmen, der aus zwei gekreuzten Rohren großen Durchmessers besteht. Diese Konstruktion ist charakterisiert durch das Kreuzen von zwei Hauptrohren, nämlich dem Sattelrohr, das zur Aufnahme des Tretlagers nach unten verlängert ist und einem Rohr, das vom Steuerrohr zum Hinterrad verläuft und sich dann zur Hinterradgabel teilt.

Das erste Fahrrad, das einen Kreuzrahmen hatte, war das "Premier" der englischen Firma Hillman, Herbert & Cooper von 1886. Diese Kreuzrahmen gehörten zu den ersten Niederrädern und wurden von verschiedenen Firmen bis in die 90er-Jahre hinein gebaut. Das Kreuz bestand aus dem Sattelrohr und einem Rohr, das vom Steuerkopf bis zur Hinterradachse lief, wobei das letzte Stück in Form einer Gabel mit dem Hinterrad dazwischen ausgebildet war. Ein Unterrohr war nicht vorhanden.

Die US D 335,640 offenbart einen gattungsgemäßen Kreuzrahmen mit geradlinigem Verlauf des ersten und zweiten Rohres, wobei das erste Rohr als nach unten geöffnetes Kastenprofil ausgebildet ist. Das Kastenprofil weist in einem Abstand zu dem Sattelrohr einen Einschnitt an dessen Oberseite auf, so dass sich die Seitenwangen des Kastenprofils in Richtung des Hinterbau-Ausfallendes teilen. Am Ende der Seitenwangen sind die Aufnahmen für eine Achse der Fahrradnabe angeordnet.

Die FR 861 980 A offenbart einen Kreuzrahmen mit geradlinigem Verlauf des ersten und zweiten Rohres, wobei der Hinterbau über Kettenstreben und zusätzliche Sattelstreben verfügt.

Die bekannten Kreuzrahmen haben sich im Markt nicht durchgesetzt und sind aufgrund der mangelnden Stabilität und Verwindungssteifigkeit für den Einsatz in Fahrrädern mit Elektromotor mit einer Trittunterstützung (E-Bikes) nicht geeignet.

Ferner offenbart die DE 20 2018 101 361 U1 einen Zweiradrahmen mit zwei Rahmen-Halbschalen aus Kunststoff, welche im Spritzgussverfahren hergestellt werden. Die beiden an einer Trennfläche aneinander anliegenden Halbschalen bilden einen vorderen Bereich des Tragrahmens aus, der eine Lenkerrohraufnahme aufweist. Ein rohrförmiger Zwischenabschnitt und ein rohrförmiger Fortsetzungsabschnitt laufen in dem vorderen Bereich des Tragrahmens zusammen, wobei der Zwischenabschnitt unterhalb des Fortsetzungsabschnitts an dem vorderen Bereich ansetzt. Der Fortsetzungsabschnitt kreuzt die rohrförmige Sattelaufnahme und erstreckt sich in Richtung des Hinterbau-Ausfallendes.

Die heutigen Rahmen für E-Bikes sind oft nicht attraktiv und einander ähnlich. Die meisten dieser Modelle sind in erster Linie preis- und in zweiter Linie funktionsorientiert.

Ausgehend von diesem Stand der Technik liegt der Erfindung die Aufgabe zugrunde, einen Kreuzrahmen für ein Fahrrad, insbesondere ein E-Bike zu schaffen, der optisch ansprechend ist, eine hohe Stabilität und Verwindungssteifigkeit bei möglichst geringem Gewicht aufweist und ein verbessertes Handling eines mit dem Rahmen ausgestatteten Fahrrades erlaubt. Zudem soll trotz einer sportlichen und ansprechenden Optik ein einfacher Durchstieg und die Nutzung eines mit dem Kreuzrahmen ausgestatteten Fahrrades für Personen mit unterschiedlicher Schrittlänge gewährleistet werden.

Diese Aufgabe wird durch einen Kreuzrahmen mit den Merkmalen des Anspruchs 1 und ein Fahrrad mit den Merkmalen des Anspruchs 9 gelöst. Vorteilhafte Ausgestaltungen der Erfindung ergeben sich aus den Merkmalen der abhängigen Ansprüche.

Der neue Rahmen greift das elegante Konzept des historischen Kreuzrahmens mit einem am Steuerrohr ansetzenden geradlinigen ersten Rohr auf, das etwa mittig das Sattelrohr kreuzt, welches sich dann in Richtung des Hinterbau-Ausfallendes teilt, wobei etwa mittig bedeutet, dass das erste Rohr das Sattelrohr in einem Bereich von +/- 10 cm bezogen auf die halbe Länge des Sattelrohres kreuzt. Das gradlinig bis zum Hinterbau-Ausfallende abfallende erste Rohr verleiht dem Rahmen und einem damit ausgestatteten Fahrrad eine elegante Erscheinung.

Mit "geradlinig" ist der Verlauf des ersten Rohres in der Seitenansicht auf ein mit dem erfindungsgemäßen Kreuzrahmen ausgestattetes, senkrecht ausgerichtetes Fahrrad gemeint. Soweit sich das erste Rohr hinter dem Sattelrohr teilt, verlaufen die geteilten Abschnitte in der Seitenansicht geradlinig, jedoch in einer Ebene senkrecht dazu gekrümmt und/oder abgewinkelt zu dem restlichen Teil des ersten Rohres.

Die hohe Stabilität und Verwindungssteifigkeit wird ohne Beeinträchtigung der eleganten Linienführung dadurch erreicht, das das oberhalb des ersten Rohres am Steuerrohr ansetzende zweite Rohr das erste Rohr kreuzt und sich dann zum Tretlagerbereich erstreckt. Das zweite Rohr weist in dem Abschnitt zwischen Steuerrohr und Kreuzung eine in der Rahmenebene liegende Abwinkelung auf. Die "Abwinkelung in der Rahmenebene" beschreibt den Verlauf des zweiten Rohres in der Seitenansicht auf ein mit dem erfindungsgemäßen Kreuzrahmen ausgestattetes, senkrecht ausgerichtetes Fahrrad.

Indem das zweite Rohr eine in der Rahmenebene liegende Abwinkelung aufweist, kann der Tretlagerbereich in Richtung des Vorderrades des mit dem erfindungsgemäßen Rahmen ausgestatteten Fahrrades verlagert und zugleich der Durchstiegsbereich breiter ausgeführt werden, sodass der Durchstieg vereinfacht wird. Die Verlagerung des Tretlagerbereichs in Richtung des Vorderrades erlaubt bei gleicher Rahmengröße zudem einen größeren Abstand zwischen Sattel und Tretkurbeln eines mit dem erfindungsgemäßen Kreuzrahmen ausgestatteten Fahrrades. Hierdurch kann derselbe Rahmen auch von Personen mit einer großen Schrittlänge verwendet werden.

Darüber hinaus wird die Schrittfreiheit eines mit dem erfindungsgemäßen Kreuzrahmen ausgestatteten Fahrrades gegenüber einem Fahrrad mit gleich großem Diamantrahmen reduziert, sodass das Fahrrad mit Kreuzrahmen auch Personen mit kleinerer Schrittlänge nutzen können. Dabei bezeichnet die Schrittfreiheit den Zwischenraum zwischen dem ersten Rohr und dem Schrittende bei gestrecktem Bein der das Fahrrad nutzenden Person bei senkrecht ausgerichtetem Fahrrad.

Der insbesondere durch die hohen Antriebskräfte bei E-Bikes stark belastete Hinterbau wird durch die erfindungsgemäß vorgesehene, mindestens eine Kettenstrebe zwischen dem Tretlagerbereich und dem Hinterbau-Ausfallende stabilisiert. Das geradlinige erste Rohr teilt sich unmittelbar hinter der Kreuzung des Sattelrohres in Richtung des Hinterbau-Ausfallendes. Außerdem weist der erfindungsgemäße Kreuzrahmen aus Gründen der Gewichtsreduktion sowie zur Betonung des reduzierten Designs ausschließlich folgende Rohre und Streben auf: das Steuerrohr, das Sattelrohr, das erste und zweite Rohr sowie die mindestens eine Kettenstrebe. Die Stabilität wird durch den ausdrücklichen Verzicht auf weitere Verstrebungen und Rohre nicht negativ beeinträchtigt.

Sofern lediglich eine Kettenstrebe vorgesehen ist, ist diese vorzugsweise an der Seite der Kette bzw. des Antriebsriemens in verstärkter Ausführung gegenüber der üblichen Anordnung von zwei Kettenstreben links und rechts vom Hinterrad vorgesehen. Iin einer bevorzugten Ausführungsform sind jedoch zwei Kettenstreben vorgesehen.

Das Ausfallende ist über eine Dreiecksabstützung in Verbindung mit dem geradlinigen Verlauf des ersten Rohres torsionssteif an dem Kreuzrahmen angeordnet. Das Ausfallende kann als separates Bauteil ausgeführt sein und die mindestens eine Kettenstrebe und das erste Rohr stoffschlüssig miteinander verbinden.

Neben der hohen Stabilität bringt die erfindungsgemäße Ausgestaltung des Kreuzrahmens Vorteile bei der Serienproduktion mit sich. Dies gilt aufgrund reduzierter Werkzeugkosten und kürzerer Produktionszeit, insbesondere bei der Ausführung des erfindungsgemäßen Kreuzrahmens aus Faserverbundwerkstoff oder aus Kunststoff, der im Spritzgussverfahren verarbeitet wird.

Durch die erfindungsgemäßen Maßnahmen wird nicht nur die Stabilität und Verwindungssteifigkeit des Rahmens verbessert, sondern außerdem das Handling eines damit ausgestatteten Fahrrades, insbesondere dessen Einlenkverhalten.

Die beiden vom Steuerrohr abgehenden Rohre können zunächst nahezu parallel (öffnend oder schliessend) zueinander verlaufen, bevor das zweite Rohr das erste Rohr in der vorderen Hälfte des Rohrabschnitts zwischen Steuerrohr und Sattelrohr kreuzt. Wenn der Winkel der Abwinkelung des zweiten Rohres etwa zwischen 90° und 170°, vorzugsweise 160° beträgt, ergibt das zweite Rohr zusammen mit dem Abschnitt des ersten Rohrs bis zur Kreuzung zwischen dem ersten und zweiten Rohr ein charakteristisches F-design.

Wenn der Querschnitt des zweiten Rohres größer als der Querschnitt des ersten Rohres ist, trägt dies nicht nur zur Stabilisierung des Rahmens insbesondere im Tretlagerbereich bei, an dem üblicherweise der Motor eines E-Bikes angeordnet wird, sondern erlaubt darüber hinaus die optisch ansprechende Unterbringung des notwendigen Akkus in diesem zweiten Rohr mit vergrössertem Querschnitt.

Unabhängig davon, ob der erfindungsgemäße Rahmen aus metallischem Werkstoff, insbesondere Aluminium, Kunststoff, Carbon oder Faserverbundwerkstoff ausgeführt ist, sind die Rohre an den Kreuzungen zwischen dem ersten Rohr und dem Sattelrohr sowie zwischen dem ersten und zweiten Rohr stoffschlüssig miteinander verbunden. In gleicher Weise sind die Kettenstreben formschlüssig angebunden.

In vorteilhafter Ausgestaltung der Erfindung sind die Knickstellen an der Abwinkelung verrundet. Das Verrunden der Knickstellen wirkt sich vorteilhaft auf die Stabilität des Kreuzrahmens aus, insbesondere werden Spannungsspitzen an der Abwinkelung reduziert und dadurch die Stabilität des Rahmens erhöht.

Nachfolgend wird der erfindungsgemäße Kreuzrahmen anhand der Figuren näher erläutert. Es zeigen
- **Figur 1**: ein mit einem erfindungsgemäßen Kreuzrahmen ausgestattetes E-Bike,
- **Figur 2a**: eine Seitenansicht eines erfindungsgemäßen Kreuzrahmens sowie
- **Figur 2b**: eine Aufsicht auf den Kreuzrahmen nach Figur 2a.

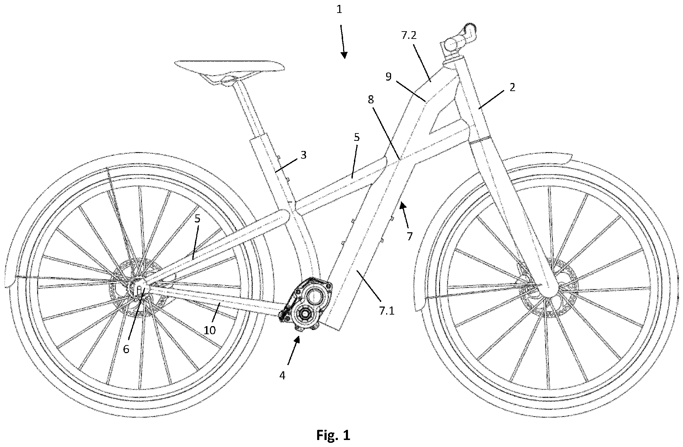

Figur 1 zeigt ein Fahrrad mit einem erfindungsgemäßen Kreuzrahmen 1 umfassend ein Steuerrohr 2 und ein Sattelrohr 3 mit einem am unteren Ende des Sattelrohrs 3 angeordneten Tretlagerbereich 4. Bei einem E-Bike wird im Tretlagerbereich 4 der elektrische Antrieb angeordnet.

An dem Steuerrohr 2 setzt unten ein geradliniges erstes Rohr 5 an, welches das Sattelrohr 3 etwa mittig kreuzt und sich dann in Richtung des Hinterbau-Ausfallendes 6 teilt. Aufgrund der vom Steuerrohr 2 in Richtung des Hinterbau-Ausfallendes 6 gleichmäßig abfallenden Linie ergibt sich ein sehr elegantes Rahmendesign.

Oberhalb des ersten Rohres 5 setzt ein zweites, im Querschnitt deutlich größeres Rohr 7 an dem Steuerrohr 2 an. Das zweite Rohr 7 kreuzt das erste Rohr 5 in dem Abschnitt zwischen dem Steuerrohr 2 und dem Sattelrohr 3 in der vorderen Hälfte und erstreckt sich sodann zu dem Tretlagerbereich 4.

Das zweite Rohr 7 weist in dem Abschnitt zwischen dem Steuerrohr 2 und der Kreuzung 8 eine in der Rahmenebene liegende Abwinkelung 9 auf, wobei die beiden abgewinkelten Abschnitte 7.1, 7.2 des zweiten Rohres 7 einen stumpfen Winkel zu der in Richtung des Steuerrohrs 2 weisenden Seite einschließen.

Schließlich weist der erfindungsgemäße Kreuzrahmen 1 zwei Kettenstreben 10 auf, die sich von dem Tretlagerbereich 4 zu dem Hinterbau-Ausfallende 6 erstrecken.

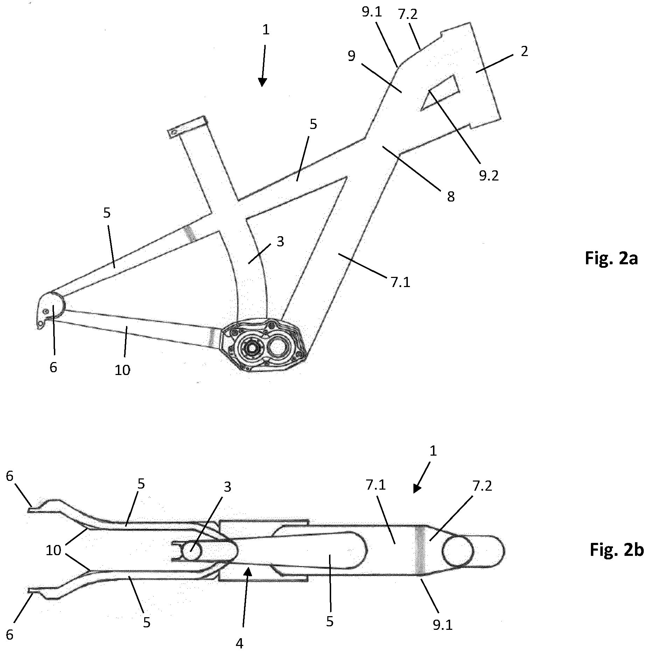

Aus der Aufsicht auf den Kreuzrahmen in Figur 2b ist erkennbar, dass sich das geradlinige erste Rohr 5 oberhalb der beiden Kettenstreben 10 unmittelbar hinter der Kreuzung des Sattlerohres 3 in Richtung des Hinterbau-Ausfallendes 6 teilt.

Aus der Seitenansicht des Kreuzrahmens nach Figur 2a ist erkennbar, dass die Knickstellen 9.1, 9.2 an der Abwinkelung 9 verrundet sind, um die Stabilität des Kreuzrahmens weiter zu verbessern.

### Bezugszeichenliste

| | |
|---|---|
| 1 | Kreuzrahmen |
| 2 | Steuerrohr |
| 3 | Sattelrohr |
| 4 | Tretlagerbereich |
| 5 | erstes Rohr |
| 6 | Hinterbau-Ausfallende |
| 7 | zweites Rohr |
| 7.1 | Abschnitt |
| 7.2 | Abschnitt |
| 8 | Kreuzung |
| 9 | Abwinkelung |
| 9.1 | Knickstelle |
| 9.2 | Knickstelle |
| 10 | Kettenstreben |

## Patentansprüche

1. Kreuzrahmen (1) für ein Fahrrad umfassend
- ein Steuerrohr (2) und ein Sattelrohr (3) mit einem am unteren Ende des Sattelrohres angeordneten Tretlagerbereich (4),
- ein am Steuerrohr (2) ansetzendes, geradliniges erstes Rohr (5), welches das Sattelrohr (3) kreuzt und sich dann in Richtung des Hinterbau-Ausfallendes (6) erstreckt,
- ein oberhalb des ersten Rohres (5) am Steuerrohr (2) ansetzendes zweites Rohr (7), welches das erste Rohr (5) an einer Kreuzung (8) kreuzt und sich dann zum Tretlagerbereich (4) erstreckt,
wobei:
- das zweite Rohr (7) in dem Abschnitt zwischen Steuerrohr (2) und der Kreuzung (8) eine in der Rahmenebene liegende Abwinkelung (9) zwischen zwei abgewinkelten Abschnitten (7.1, 7.2) des zweiten Rohres (7) aufweist, wobei die beiden abgewinkelten Abschnitte (7.1, 7.2) des zweiten Rohres (7) einen stumpfen Winkel zu der in Richtung des Steuerrohrs (2) weisenden Seite einschließen,
- sich mindestens eine Kettenstrebe (10) von dem Tretlagerbereich (4) zu dem Hinterbau-Ausfallende (6) erstreckt,
- sich das geradlinige erste Rohr (5) unmittelbar hinter der Kreuzung des Sattlerohres (3) in Richtung des Hinterbau-Ausfallendes (6) teilt
und
- der Kreuzrahmen (1) ausschließlich folgende Rohre und Streben aufweist: das Steuerrohr (2), das Sattelrohr (3), das erste und zweite Rohr (5,7) sowie die mindestens eine Kettenstrebe (10).

2. Kreuzrahmen (1) nach Anspruch 1, **dadurch gekennzeichnet, dass** das zweite Rohr (7) das erste Rohr (5) in der vorderen Hälfte des Rohrabschnitts zwischen Steuerrohr (2) und Sattelrohr (3) kreuzt.

3. Kreuzrahmen (1) nach Anspruch 1 oder 2, **dadurch gekennzeichnet, dass** der stumpfe Winkel kleiner als 170° ist.

4. Kreuzrahmen (1) nach einem der Ansprüche 1 - 3, **dadurch gekennzeichnet, dass** das erste Rohr (5) das Sattelrohr (3) etwa mittig kreuzt.

5. Kreuzrahmen (1) nach einem der Ansprüche 1 bis 4, **dadurch gekennzeichnet, dass** der Querschnitt des zweiten Rohres (7) größer als der Querschnitt des ersten Rohres (5) ist.

6. Kreuzrahmen (1) nach einem der Ansprüche 1 bis 5, **dadurch gekennzeichnet, dass** die Rohre an den Kreuzungen (8) zwischen dem ersten Rohr (5) und dem Sattelrohr (3) sowie zwischen dem ersten (5) und zweiten Rohr (7) stoffschlüssig miteinander verbunden sind.

7. Kreuzrahmen (1) nach einem der Ansprüche 1 bis 6, **dadurch gekennzeichnet, dass** der Kreuzrahmen (1) in Faserverbundbauweise ausgeführt ist.

8. Kreuzrahmen (1) nach einem der Ansprüche 1 bis 7, **dadurch gekennzeichnet, dass** Knickstellen (9.1,9.2) an der Abwinkelung (9) verrundet sind.

9. Fahrrad mit einem Kreuzrahmen (1) nach einem oder mehreren der Ansprüche 1 bis 8.

## Claims

1. Cross frame (1) for a bicycle, comprising:
- a head tube (2) and a seat tube (3) with a bottom bracket area (4) arranged at a lower end of the seat tube;
- a rectilinear first tube (5) starts from the head tube (2), which crosses the seat tube (3) and then extends towards the rear end - rear dropout (6),
- a second tube (7) that starts from the head tube (2) above the first tube (5), crosses the first tube (5) at an intersection (8) and then extends towards the bottom bracket area (4),
wherein:
- the second tube (7) exhibits an angled deflection (9) between two angled sections (7.1, 7.2) of the second tube (7) located within a plane of the frame in the section between the head tube (2) and the intersection (8), wherein the two angled sections (7.1, 7.2) of the second tube (7) enclose an obtuse angle with respect to a side pointing in the direction of the head tube (2); and
- at least one chain stay (10) extends from the bottom bracket area (4) to the rear end - rear dropout (6),
- the rectilinear first tube (5) splits directly behind the intersection of the seat tube (3) in the direction of the rear end - rear dropout (6)
and
- the cross frame (1) only comprises the following tubes and stays: the head tube (2), the seat tube (3), the first and second tube (5, 7) and the at least one chain stay (10).

2. Cross frame (1) according to Claim 1, **characterized in that** the second tube (7) crosses the first tube (5) in the front half of the tube section between the head tube (2) and the seat tube (3).

3. Cross frame (1) according to Claim 1 or 2, **characterized in that** the obtuse angle is less than 170°.

4. Cross frame (1) according to one of Claims 1-3, **characterized in that** the first tube (5) crosses the seat tube (3) approximately in the middle.

5. Cross frame (1) according to one of Claims 1 to 4, **characterized in that** the cross-section of the second tube (7) is larger than the cross-section of the first tube (5).

6. Cross frame (1) according to one of Claims 1 to 5, **characterized in that** the tubes are connected to one another in a firmly bonded manner at the intersections (8) between the first tube (5) and the seat tube (3) and between the first (5) and second tube (7).

7. Cross frame (1) according one of Claims 1 to 6, **characterized in that** the cross frame (1) is constructed using fibre-reinforced composites.

8. Cross frame (1) according to one of Claims 1 to 7, **characterized in that** kinks (9.1, 9.2) at the angular deflection (9) are rounded.

9. Bicycle with a cross frame (1) according to one or more of Claims 1 to 8.

## Revendications

1. Cadre croisé (1), destiné à une bicyclette, comprenant
- un tube de direction (2) et un tube de selle (3), avec une zone de boîtier de pédalier (4) placée sur l'extrémité inférieure du tube de selle,
- un premier tube (5) rectiligne se raccordant sur le tube de direction (2), lequel croise le tube de selle (3) et s'étend ensuite dans la direction de la patte arrière (6) du cadre,
- un deuxième tube (7) se raccordant sur le tube de direction (2), au-dessus du premier tube (5), lequel croise le premier tube (5) à un croisement (8) et s'étend ensuite vers la zone du boîtier de pédalier (4),
- dans le segment entre le tube de direction (2) et le croisement (8), le deuxième tube (7) comportant un coudage (9) situé dans le plan du cadre, entre deux segments (7.1, 7.2) coudés du deuxième tube (7), les deux segments (7.1, 7.2) coudés du deuxième tube (7) incluant un angle obtus par rapport au côté montrant dans la direction du tube de direction (2),
- au moins une base de chaîne (10) s'étendant de la zone du boîtier de pédalier (4) jusqu'à la patte arrière (6) du cadre,
- le premier tube (5) rectiligne se divisant directement derrière le croisement du tube de selle (3) dans la direction de la patte arrière (6) du cadre
et
- le cadre croisé (1) comportant exclusivement les tubes et bases suivant (e)s : le tube de direction (2), le tube de selle (3), le premier et le deuxième tubes (5,7), ainsi que l'au moins une base de chaîne (10).

2. Cadre croisé (1) selon la revendication 1, **caractérisé en ce que** le deuxième tube (7) croise le premier tube (5) dans la moitié antérieure du segment de tube entre le tube de direction (2) et le tube de selle (3).

3. Cadre croisé (1) selon la revendication 1 ou 2, **caractérisé en ce que** l'angle obtus est inférieur à 170 °.

4. Cadre croisé (1) selon l'une quelconque des revendications 1 à 3, **caractérisé en ce que** le premier tube (5) croise le tube de selle (3) approximativement au centre.

5. Cadre croisé (1) selon l'une quelconque des revendications 1 à 4, **caractérisé en ce que** la section transversale du deuxième tube (7) est supérieure à la section transversale du premier tube (5).

6. Cadre croisé (1) selon l'une quelconque des revendications 1 à 5, **caractérisé en ce qu'**aux croisements (8) entre le premier tube (5) et le tube de selle (3), ainsi qu'entre le premier (5) et le deuxième tube (7), les tubes sont assemblés les uns aux autres par conjugaison de matières.

7. Cadre croisé (1) selon l'une quelconque des revendications 1 à 6, **caractérisé en ce que** le cadre croisé (1) est réalisé en structure composite renforcée par fibres.

8. Cadre croisé (1) selon l'une quelconque des revendications 1 à 7, **caractérisé en ce que** des points d'inflexion (9.1,9.2) sur les coudages (9) sont arrondis.

9. Bicyclette, pourvue d'un cadre croisé (1) selon l'une quelconque ou plusieurs des revendications 1 à 8.
